# EUROPEAN PATENT APPLICATION

(11) **EP 2 851 521 A1**
(43) Date of publication of application: **25.03.2015**
(21) Application number: 14183634.6
(22) Date of filing: 04.09.2014
(51) Int. Cl.: F01D 25/18, F01D 19/00, F02C 7/32, F16K 15/04, F02C 7/277

(54) **Air turbine starter including a lightweight, low differential pressure check valve**

(30) Priority: 23.09.2013 US 201314034058
(71) Applicant: Honeywell International Inc., Morristown, NJ 07962-2245 (US)
(72) Inventor: ZEINER, Peter Kenneth, Morristown, NJ New Jersey 07962-2245 (US); HO, Benjamin, Morristown, NJ New Jersey 07962-2245 (US); BYERS, Cindy, Morristown, NJ New Jersey 07962-2245 (US)
(74) Representative: Houghton, Mark Phillip

(57) **Abstract**

An air turbine starter includes a starter housing and a check valve. The check valve is disposed within the starter housing and is configured, in response to a pressure differential across the check valve, to selectively allow and prevent lubricant to flow therefrom. The check valve includes a valve includes a valve body, a valve seat, a valve bore, a valve element, and a plurality of rounded grooves. The valve bore is formed in the valve body between the valve seat and the lubricant outlet port. The valve element is disposed within the valve bore and is movable between a plurality of open positions and a closed position. The rounded grooves are formed in the valve body, and are disposed adjacent to, and in fluid communication with, the valve bore to improve lubricant to flow past the valve element when the valve element is in an open position.

## Description

### TECHNICAL FIELD

The present invention generally relates to air turbine starters, and more particularly relates to an air turbine starter with a lightweight, low differential pressure check valve.

### BACKGROUND

An air turbine starter (ATS) is typically used to start the rotation of an aircraft turbine engine, such as a gas turbine jet engine. The ATS is typically mounted to the jet engine through a gearbox or other transmission assembly, and a cover plate or wall is located between the starter and gearbox housings. To start the engine, pressurized air is supplied to the ATS by, for example, opening a starter air valve (SAV). The pressurized air supplied to the ATS causes it to rotate and generate a torque. The gearbox transfers the torque from the rotating ATS to the engine to drive the engine up to speed and allow engine ignition. Thereafter, the SAV is closed, and a clutch disengages the ATS turbine from the ATS output shaft. Thus, the ATS turbine comes to rest, while the ATS output shaft is driven by the engine.

Many air turbine starters rely on a supply of lubricant to run properly. Some air turbine starters use an assisted wet cavity design (AWC) to assist in lubricant supply. With these designs, the ATS housing includes a mounting face or mounting flange that is sealingly engaged with, and coupled to, the gearbox. The ATS and gearbox are each configured with ports that allow lubricant to flow between the gearbox and the ATS.

In many AWC designs, the pressure within the gearbox and ATS housing may be about 0.1 to 0.3 psi above ambient pressure. This generally presents no issues. However, it has been postulated that if a breach in the ATS housing were to occur, resulting in the ATS housing pressure equalizing with ambient pressure, then the pressure within the gearbox may cause lubricant to leak from the gearbox to the starter and, consequently, out through the breach. To address such a postulated event, many ATSs include a check valve or reed valve. However, because the pressure differential between the ambient environment and the gearbox is relatively small, it has been found that these valve types may not work consistently.

Hence, there is a need for a lightweight, low differential pressure check valve that will consistently operate at relatively low differential pressures to ensure lubricant is not lost from the AGB in the event of an ATS housing breach. The present invention addresses at least this need.

### BRIEF SUMMARY

In one embodiment, an air turbine starter includes a starter housing and a check valve. The starter housing includes a lubricant supply opening and a lubricant discharge opening. The lubricant supply opening is adapted to receive lubricant from a lubricant source, and the lubricant discharge opening is configured to supply lubricant from the starter housing to the lubricant source. The check valve is disposed within the starter housing proximate the lubricant discharge opening. The check valve is configured, in response to a pressure differential across the check valve, to selectively allow and prevent lubricant to flow from the starter housing and through the discharge opening. The check valve includes a valve includes a valve body, a valve seat, a valve bore, a valve element, and a plurality of rounded grooves. The valve body includes a lubricant inlet port and a lubricant outlet port. The lubricant inlet port is adapted to receive a flow of lubricant, and the lubricant outlet port is in fluid communication with the lubricant discharge opening. The valve seat is formed in the valve body and is disposed between the lubricant inlet port and the lubricant outlet port, and has an opening formed therein. The valve bore is formed in the valve body between the valve seat and the lubricant outlet port. The valve element is disposed within the valve bore and is movable between a plurality of open positions, in which lubricant may flow between the lubricant inlet port and the lubricant outlet port, and a closed position, in which lubricant may not flow between the lubricant inlet port and the lubricant outlet port. The rounded grooves are formed in the valve body, and are disposed adjacent to, and in fluid communication with, the valve bore to improve lubricant to flow past the valve element when the valve element is in an open position.

In another embodiment, a gas turbine engine system includes a gas turbine engine, a gear box, and an air turbine starter. The gear box is coupled to the gas turbine engine and is configured to supply and receive lubricant. The air turbine starter is coupled to the auxiliary gear box and includes a starter housing and a check valve. The starter housing includes a lubricant supply opening and a lubricant discharge opening. The lubricant supply opening is coupled to receive lubricant supplied from the auxiliary gear box, and the lubricant discharge opening is configured to supply lubricant from the starter housing to the auxiliary gear box. The check valve is disposed within the starter housing proximate the lubricant discharge opening. The check valve is configured, in response to a pressure differential between the starter housing and the auxiliary gear box, to selectively allow and prevent lubricant to flow from the starter housing, through the discharge opening, and into the auxiliary gear box. The check valve includes a valve includes a valve body, a valve seat, a valve bore, a valve element, and a plurality of rounded grooves. The valve body includes a lubricant inlet port and a lubricant outlet port. The lubricant inlet port is adapted to receive a flow of lubricant, and the lubricant outlet port is in fluid communication with the lubricant discharge opening. The valve seat is formed in the valve body and is disposed between the lubricant inlet port and the lubricant outlet port, and has an opening formed therein. The valve bore is formed in the valve body between the valve seat and the lubricant outlet port. The valve element is disposed within the valve bore and is movable between a plurality of open positions, in which lubricant may flow between the lubricant inlet port and the lubricant outlet port, and a closed position, in which lubricant may not flow between the lubricant inlet port and the lubricant outlet port. The rounded grooves are formed in the valve body, and are disposed adjacent to, and in fluid communication with, the valve bore to improve lubricant to flow past the valve element when the valve element is in an open position.

In yet another embodiment, a check valve includes a valve body, a valve seat, a valve bore, a valve element, and a plurality of rounded grooves. The valve body includes a lubricant inlet port and a lubricant outlet port. The lubricant inlet port is adapted to receive a flow of lubricant, and the lubricant outlet port is in fluid communication with the lubricant discharge opening. The valve seat is formed in the valve body and is disposed between the lubricant inlet port and the lubricant outlet port, and has an opening formed therein. The valve bore is formed in the valve body between the valve seat and the lubricant outlet port. The valve element is disposed within the valve bore and is movable between a plurality of open positions, in which lubricant may flow between the lubricant inlet port and the lubricant outlet port, and a closed position, in which lubricant may not flow between the lubricant inlet port and the lubricant outlet port. The rounded grooves are formed in the valve body, and are disposed adjacent to, and in fluid communication with, the valve bore to improve lubricant to flow past the valve element when the valve element is in an open position.

Furthermore, other desirable features and characteristics of the air turbine starter will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a simplified functional block diagram of at least a portion of one embodiment of a gas turbine engine system;
FIG. 2 depicts a cross section view of one embodiment of an air turbine starter that may be used to implement the system of FIG. 1;
FIG. 3 depicts a cross section view of one embodiment of a check valve that may be disposed within the air turbine starter of FIG. 1 or FIG. 2; and
FIG. 4 depicts and end view of the check valve depicted in FIG. 3, but with the valve element removed.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

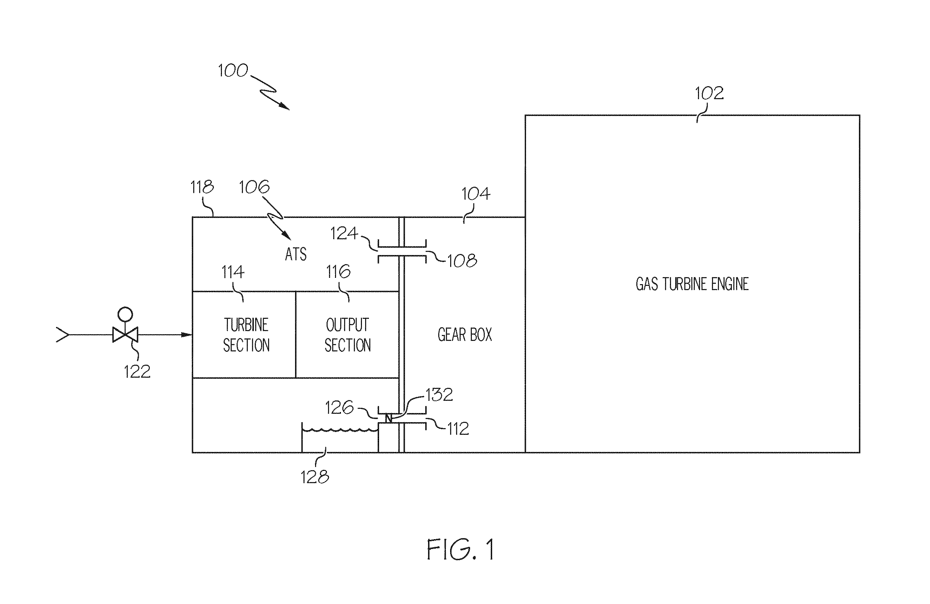

Turning now to the description, and with reference to FIG. 1, a simplified functional block diagram of at least a portion of a gas turbine engine system 100 is depicted. The depicted system 100 includes a gas turbine engine 102, a gear box 104, and an air turbine starter (ATS) 106. The gas turbine engine 102 may be implemented as any one of numerous types of gas turbine engines. For example, the gas turbine engine 102 may be implemented as a propulsion engine or an auxiliary power unit (APU). In this regard, it may be implemented using any one of numerous multi-spool turbofan gas turbine propulsion engines, or as a single or multi-spool APU.

Regardless of its specific implementation, the gas turbine engine 102 is coupled to the gear box 104. The gear box 104, which may be configured as an auxiliary gear box (AGB), houses a plurality of non-illustrated gears. These non-illustrated gears are configured to transfer torque from the ATS 106 to the gas turbine engine 102 during the start cycle of the gas turbine engine 102. The gear box 104 is additionally configured to supply and receive lubricant. In particular, it is configured to at least supply lubricant to, and to receive lubricant from, the ATS 106. To do so, the gear box 104 includes a lubricant supply passage 108 and a lubricant return passage 112. Lubricant is supplied from the gear box 104 to the ATS 106 via the lubricant supply passage 108, and is returned from the ATS 106 to the gear box 104 via the lubricant return passage 112.

The ATS 106 includes a turbine section 114 and an output section 116, which are housed within a starter housing 118. The turbine section 114 is coupled to selectively receive a flow of compressed air from a non-illustrated pressurized air source via, for example, a starter air valve (SAV) 122. When the SAV 122 is opened, and pressurized air is supplied from the non-illustrated pressurized air source to the turbine section 114, the turbine section 114 rotates and generates a torque. This torque is transferred, via the output section 116 and the gear box 104, to the gas turbine engine 102. When the gas turbine engine 102 is driven to speed ignited, the SAV 122 is closed, and clutch (not depicted in FIG. 1) disengages the turbine section 114 from the output section 116. Thus, the turbine section 114 comes to rest, while the output section 116 is driven by the gas turbine engine 102.

Because at least a portion of the ATS 106 continuously rotates during both the start and run phases of the gas turbine engine 102, the ATS 106 relies on a continuous flow of lubricant into and through it to ensure proper and continued operation. Thus, as FIG. 1 further depicts, the starter housing 118 includes a lubricant supply opening 124 and a lubricant discharge opening 126. The lubricant supply opening 124 is coupled to receive lubricant from a lubricant source, and the lubricant discharge opening 126 is configured to supply lubricant from the starter housing 118 to the lubricant source. In the depicted embodiment the lubricant source is the gear box 104. As such, the lubricant supply opening 124 and the lubricant discharge opening 126 are in fluid communication with the lubricant supply passage 108 and the lubricant return passage 112, respectively.

In addition to the above, a reservoir 128 and a check valve 132 are also disposed within the starter housing 118. The reservoir 128, which may be defined by the starter housing 118 and may be configured as a sump, is sized to hold a predetermined volume of the lubricant that is supplied to the ATS 106 via the lubricant supply opening 124. The check valve 132 is disposed within the starter housing 118 proximate the lubricant discharge opening 126, and receives lubricant from the reservoir 128 when the lubricant therein exceeds the predetermined volume. The check valve 132 is configured, in response to a pressure differential across the check valve 132, to selectively allow and prevent lubricant to flow from the starter housing 118 and through the lubricant discharge opening 126. The pressure differential across the check valve 132 exists when there is a pressure differential between the interior portion of the gear box 104 and the interior of the starter housing 118. A particular preferred embodiment of the check valve 132 will be described further below. Before doing so, however, and for completeness, a slightly more detailed description of an embodiment of the ATS 106 will be provided.

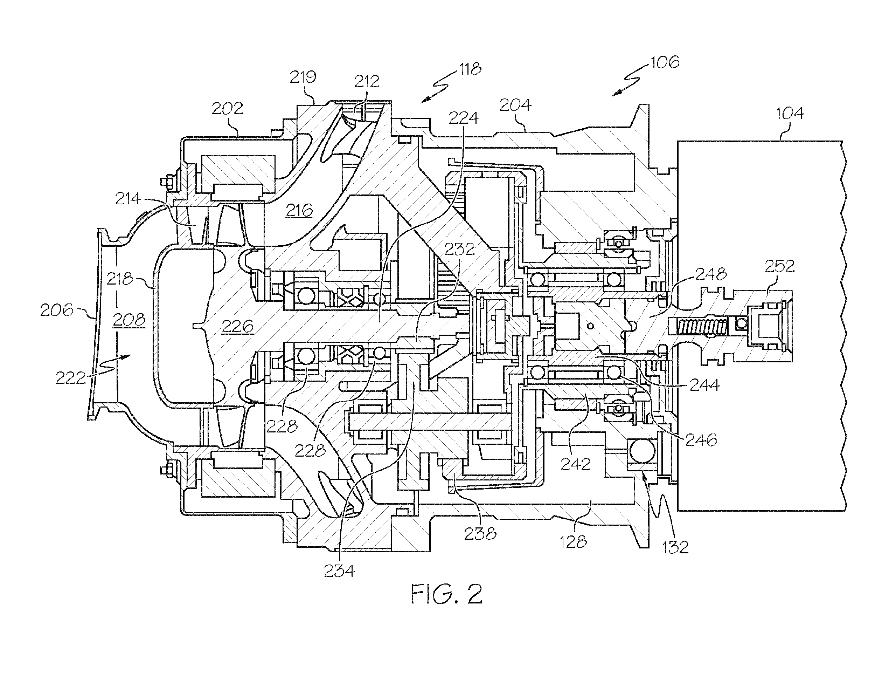

Referring now to FIG. 2, a cross sectional view of an exemplary ATS 106 that may be used to implement the gas turbine engine system 100 of FIG. 1 is depicted. The ATS 106, as already noted, is coupled to the gear box 104 and is housed within the starter housing 118. The starter housing 118 may be made up of two or more parts that are combined together or may be integrally formed as a single piece, but in the depicted embodiment it includes at least a starter housing turbine section 202 and a starter housing output section 204. The starter housing 118 additionally includes an inlet plenum 206, which directs pressurized air into the starter housing 118. The pressurized air supplied to the plenum 206 flows through an annular flow channel 208 and out a radial outlet port 212. The annular flow channel 208 includes an axial flow portion 214 and a exhaust diffuser 216. The axial flow portion 214 is formed through a stator assembly 218 that is mounted within the stator housing turbine section 202 proximate the inlet plenum 206. The exhaust diffuser 216 is formed between a portion of the stator housing turbine section 202 and an exhaust housing 219 that is mounted between the starter housing 118 and the starter housing output section 204.

A turbine wheel 222 is rotationally mounted within the stator housing turbine section 202. In particular, the turbine wheel 222 has an output shaft 224 that extends from a hub 226, through the exhaust housing 219, and into the stator housing output section 204. The turbine wheel output shaft 224 is rotationally mounted in the stator housing output section 204 by bearing assemblies 228. A gear 232 is coupled to the turbine wheel output shaft 224, and meshes with a compound planetary gear train 234. The compound planetary gear train 234 engages a ring gear 238 and a hub gear 242, which is in turn coupled to an overrunning clutch 244. During operation of the ATS 106, this gearing configuration converts the high speed, low torque output of the turbine wheel output shaft 224 into low speed, high torque input for the overrunning clutch 244. The overrunning clutch 244, as just noted, is coupled to the hub gear 242, which is supported by another bearing assembly 246. A drive shaft 248 extends from the overrunning clutch 244, through the starter housing output section 204, and is coupled to a starter output shaft 252. The starter output shaft 252 is, in turn, coupled to non-illustrated gearing within the gear box 104.

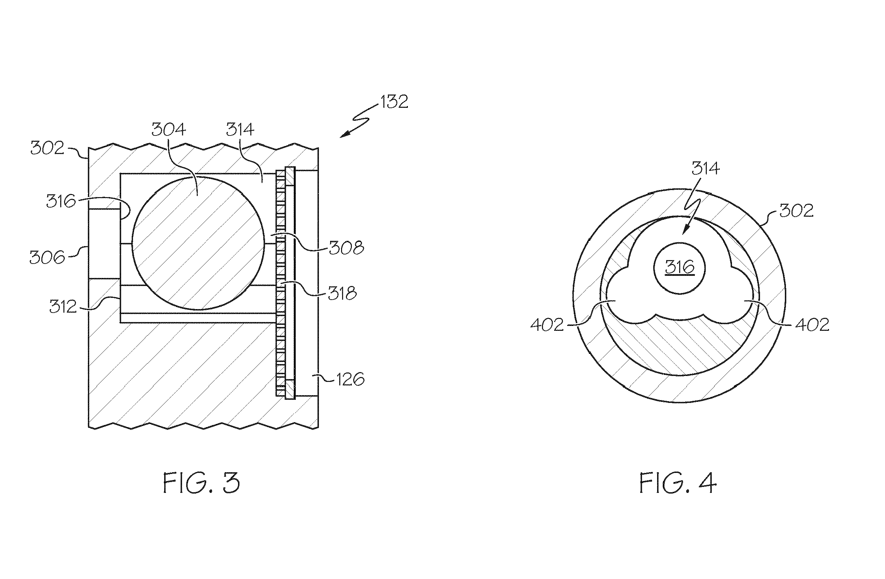

The check valve 132 is also depicted in FIG. 2 and, as was previously noted, is disposed within the starter housing 118 proximate the lubricant discharge opening 126. The check valve 132 is also disposed adjacent the reservoir 132 and receives lubricant therefrom when the lubricant in the reservoir exceeds the predetermined volume. With reference now to FIG. 3, an embodiment of the check valve 132 will be described.

The check valve 132 includes a valve body 302 and a valve element 304. The valve body 302 includes a lubricant inlet port 306 and a lubricant outlet port 308. The lubricant inlet port 306 is adapted to receive a flow of lubricant from, for example, the reservoir 128, and the lubricant outlet port 308 is in fluid communication with the lubricant discharge opening 126. It will be appreciated that the valve body 302 may be formed as an integral part of the starter housing 118, and thus be defined by the lubricant discharge opening 126, or the valve body 302 may be separately formed and disposed adjacent to or within the discharge opening 126.

The valve body 302 has a valve seat 312 and a valve bore 314 formed therein. The valve seat 312 is disposed between the lubricant inlet port 306 and the lubricant outlet port 308 and has an opening 316 formed therein. The opening 316, as will be described momentarily, is selectively sealed and unsealed by the valve element 304, and thus selectively prevents and allows, respectively, lubricant flow between the lubricant inlet 306 and outlet 308 ports. The valve bore 314 is formed in the valve body 302 between the valve seat 312 and the lubricant outlet port 308, and has the valve element 304 disposed therein.

The valve element 304 is movably disposed within the valve bore 314 and is movable between a closed position and a plurality of open positions. In the closed position, the valve element 304 sealingly engages the valve seat 312 and thus lubricant may not flow between the lubricant inlet port 306 and the lubricant outlet port 308. Conversely, in an open position, the valve element 304 is spaced apart from the valve seat 312 and thus lubricant may flow between the lubricant inlet port 306 and the lubricant outlet port 308.

As FIG. 3 also depicts, a perforated screen 318 is coupled to the valve body 302 and is disposed adjacent the lubricant outlet port 308. The perforated screen 318, which may be implemented with any one of numerous suitably sized perforations, prevents any debris that may be present in the lubricant in the starter housing 118 from entering the gear box 104. The perforated screen 318 additionally retains the valve element 304 within the valve bore 314.

It will be appreciated that the valve element 304 may be variously shaped, and may comprise various materials. In the depicted embodiment, the valve element 304 is solid and spherically shaped, and is comprised of a relatively lightweight, non-buoyant thermoplastic such as, for example, PEEK (polyetheretherketone). Regardless of the specific shape of the valve element 302, it will additionally be appreciated that the valve seat 312 is preferably conformed to the shape of the valve element 304 in order to provide a sufficiently fluid-tight seal when the valve element 304 is in the closed position.

The valve element 304 and valve bore 314 are dimensioned to accommodate the maximum lubricant flow rate that is needed between the gear box 104 and ATS 106. Moreover, the valve element 304 is preferably sized as large as possible to respond quickly to a pressure differential between the gear box 104 and starter housing 118. To balance these flow and size needs, the valve body 302, as depicted more clearly in FIG. 4, has a plurality of rounded grooves 402 formed therein. The rounded grooves 402 are disposed adjacent to, and are in fluid communication with, the valve bore 314 and are configured to improve lubricant flow past the valve element 304 when the valve element 304 is in an open position. Although the number and location of the grooves 402 may vary, in the depicted embodiment the valve bore 314 has two grooves 402 formed therein, which are radially spaced apart by about 120-degrees. It is additionally noted that remainder of the valve bore 314 between the grooves 402 is shaped and dimensioned to provide proper positioning and centering of the valve element 304.

During normal operations of the gas turbine engine system 100, there is no pressure differential between the gear box 104 and ATS 106, and thus no pressure differential between the gear box lubricant return passage 112 and the ATS lubricant discharge opening 126. As a result, the valve element 304 may freely translate within the valve bore 314 to an open position, allowing lubricant to flow from the reservoir 128, into and through the lubricant inlet port 306, into and through the opening 316 in the valve seat 312, and out the lubricant outlet port 308. As noted above, the rounded grooves 402 formed in the valve body 302 allow lubricant that flows through the opening 316 in the valve seat to flow past the valve element 304 to the lubricant outlet port.

Now, in the highly unlikely, yet postulated event of a breach in the starter housing 118, the pressure in the ATS 106 equalizes with ambient pressure and drops below the pressure within the gear box 104. This pressure differential will generally be relatively small and can be, for example, about 0.1 to 0.3 psid. Regardless of the specific magnitude, the check valve 132, in response to the differential pressure, moves to the closed position. More specifically, the valve element 304 sealingly engages the valve seat 312, and thus prevents lubricant flow from the gear box lubricant return passage 112 into the ATS lubricant discharge opening 126, and out the breach in the starter housing 118.

The check valve 132 disclosed herein is a lightweight, low differential pressure valve that consistently operates at relatively low differential pressures to ensure lubricant is not lost from the gear box in the highly unlikely, yet postulated event of a starter housing breach.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An air turbine starter, comprising:
a starter housing including a lubricant supply opening and a lubricant discharge opening, the lubricant supply opening adapted to receive lubricant from a lubricant source, the lubricant discharge opening configured to supply lubricant from the starter housing to the lubricant source; and
a check valve disposed within the starter housing proximate the lubricant discharge opening, the check valve configured, in response to a pressure differential across the check valve, to selectively allow and prevent lubricant to flow from the starter housing and through the discharge opening,
the check valve comprising:
a valve body including a lubricant inlet port and a lubricant outlet port, the lubricant inlet port adapted to receive a flow of lubricant, the lubricant outlet port in fluid communication with the lubricant discharge opening,
a valve seat formed in the valve body and disposed between the lubricant inlet port and the lubricant outlet port, the valve seat having an opening formed therein,
a valve bore formed in the valve body between the valve seat and the lubricant outlet port,
a valve element disposed within the valve bore and movable between a plurality of open positions, in which lubricant may flow between the lubricant inlet port and the lubricant outlet port, and a closed position, in which lubricant, may not flow between the lubricant inlet port and the lubricant outlet port, and
a plurality of rounded grooves formed in the valve body, the rounded grooves disposed adjacent to, and in fluid communication with, the valve bore to improve lubricant to flow past the valve element when the valve element is in an open position.

2. The air turbine starter of claim 1, further comprising:
a reservoir disposed within the starter housing and configured to hold a predetermined volume of the lubricant supplied to the lubricant supply opening.

3. The air turbine starter of claim 2, wherein the check valve receives lubricant when the lubricant within the reservoir exceeds the predetermined volume.

4. The air turbine starter of claim 1, further comprising a perforated screen coupled to the valve body and disposed adjacent the lubricant outlet port.

5. The air turbine starter of claim 4, wherein the valve seat and perforated screen retain the valve element within the valve bore.

6. The air turbine starter of claim 1, wherein the valve element is spherically shaped.

7. The air turbine starter of claim 1, wherein the valve element comprises a thermoplastic.

8. The air turbine starter of claim 1, wherein:
the rounded grooves are radially spaced apart by about 120-degrees; and
the valve bore is shaped and dimensioned to provide proper positioning and centering of the valve element.

9. A check valve, comprising:
a valve body including a lubricant inlet port and a lubricant outlet port, the lubricant inlet port adapted to receive a flow of lubricant, the lubricant outlet port in fluid communication with the lubricant discharge opening;
a valve seat formed in the valve body and disposed between the lubricant inlet port and the lubricant outlet port, the valve seat having an opening formed therein;
a valve bore formed in the valve body between the valve seat and the lubricant outlet port;
a valve element disposed within the valve bore and movable between a plurality of open positions, in which lubricant may flow between the lubricant inlet port and the lubricant outlet port, and a closed position, in which lubricant may not flow between the lubricant inlet port and the lubricant outlet port; and
a plurality of rounded grooves formed in the valve body, the rounded grooves disposed adjacent to, and in fluid communication with, the valve bore to improve lubricant to flow past the valve element when the valve element is in an open position.
